# EUROPÄISCHE PATENTSCHRIFT

(11) **EP 2 631 202 B1**
(45) Veröffentlichungstag und Bekanntmachung des Hinweises auf die Patenterteilung: **20.05.2015**
(21) Anmeldenummer: 12157030.3
(22) Anmeldetag: 27.02.2012
(51) Int. Cl.: B65G 15/30, B23K 26/08

(54) **Vorrichtung zur Aufnahme von Fördergütern sowie Verfahren zum Abführen oder zum Bearbeiten von Werkstücken**
Apparatus for taking up goods and method for discharging or processing workpieces
Dispositif pour recevoir des marchandises ainsi que procédé de conduite ou de traitement de pièces usinées

(43) Veröffentlichungstag der Anmeldung: 28.08.2013
(73) Patentinhaber: Trumpf Sachsen GmbH, 01904 Neukirch (DE); TRUMPF Werkzeugmaschinen GmbH + Co. KG, 71254 Ditzingen (DE)
(72) Erfinder: Epperlein, Peter, 71229 Leonberg (DE); Gruhl, Norbert, 02627 Hochkirch / OT Lehn (DE); Schmidt, Mathis, 01904 Neukirch (DE); Wahl, Eberhard, 73235 Weilheim (DE)
(74) Vertreter: Maser, Jochen

(56) Entgegenhaltungen:
- EP-B1- 1 901 893
- WO-A1-97/09252
- WO-A2-2007/090148
- DE-A1-102004 041 705
- DE-A1-102005 015 351
- DE-B3-102010 037 885
- DE-U1-202004 018 028
- JP-A- 2007 145 555
- US-A1- 2008 110 570
- US-A1- 2010 078 296

## Beschreibung

Die Erfindung betrifft eine Vorrichtung zur Aufnahme von Fördergütern mit einer Trenneinrichtung sowie ein Verfahren zum Abführen von Werkstücken aus einer Bearbeitungsmaschine als auch ein Verfahren zum Bearbeiten von einem plattenförmigen Material in einer Bearbeitungsmaschine.

Aus der EP 1 901 893 B1 sind eine Vorrichtung und ein Verfahren gemäß den Oberbegriffen der Ansprüche 1 und 7 bekannt. Aus dieser geht eine Werkstückauflage zur Aufnahme von plattenförmigen Materialien hervor, welche in einer Bearbeitungsmaschine vorgesehen ist. Die Bearbeitungsmaschine umfasst eine Trenneinrichtung, mittels der zumindest ein Trennvorgang im plattenförmigen Material zur Herstellung von Werkstücken durchgeführt wird. Diese Werkstückauflage umfasst einen ersten und zweiten Auflagetisch mit einer ersten und zweiten Auflagefläche, die jeweils einen separat angetriebenen Fördergurt umfassen. Der Fördergurt wird von mehreren Walzen geführt, wobei zwischen zumindest zwei zueinander beabstandeten und in einer Ebene liegenden Walzen die jeweilige Auflagefläche des Auflagetisches gebildet ist. Die Auflagefläche des ersten Auflagetisches und die Auflagefläche des zweiten Auflagetisches sind durch einen Spalt voneinander beabstandet, der sich unterhalb der Trenneinrichtung befindet.

Aus der DE 10 2010 037 885 B3 ist ein Verfahren gemäß dem Oberbegriff des Anspruchs 6 sowie eine Anordnung zum Abführen von Bearbeitungsprodukten von einer Bearbeitungsmaschine zum Bearbeiten von Werkstücken, insbesondere Blechen, bekannt. Diese Anordnung umfasst der Bearbeitungsmaschine zugeordnet eine Umschlageinrichtung, welche mit einer Transfereinrichtung die bearbeiteten Werkstücke aus der Bearbeitungsmaschine heraus fördert und diese zu einem Entladeplatz transferiert. Diese Transfereinrichtung weist ein endlos umlaufendes Förderband auf. Von der Umschlageinrichtung werden die Bearbeitungsprodukte beziehungsweise Werkstücke, die aus der Bearbeitungsmaschine heraus gefördert wurden, umgesetzt und auf einen Fördergurt des Förderbandes aufgelegt, so dass im Anschluss ein Ausschleusen der Werkstücke ermöglicht wird.

Aus der US 2008/0110570 A1 ist ein Fördergurt für eine maschinelle Fördereinrichtung aus einem Bandmaterial mit einer Tragseite für zumindest ein Fördergut und mit einer Laufseite, welche entlang von zumindest einer Tragrolle oder einer Umlenkrolle der Fördereinrichtung bewegbar ist, bekannt. Auf der Tragseite des Bandmaterials ist eine erste Markierung und eine zweite Markierung für einen ersten und zweiten Flächenabschnitt vorgesehen; welcher sich in Längsrichtung des Bandmaterials nebeneinander erstrecken.

Die vorgenannten maschinellen Förderbänder bestehen alle gemeinsam aus einem Fördergurt, dessen Tragseite aus einem einheitlichen Material und mit einer einheitlichen Oberfläche ausgebildet ist. Die zu bearbeitenden plattenförmigen Materialien oder Werkstücke in einer Bearbeitungsmaschine oder die auszuschleusenden Werkstücke nach der Bearbeitung in einer Bearbeitungsmaschine können aus unterschiedlichen Materialien bestehen. Darüber hinaus werden in aufeinander folgenden Arbeitsprozessen auch unterschiedliche Materialien eingesetzt, jedoch werden diese alle über denselben Fördergurt aufgenommen und/oder ausgeschleust. Dadurch kann es zu einer Materialverschleppung, beispielsweise durch Schmutzpartikel, Bearbeitungsreste oder dergleichen, kommen. Darüber hinaus kann eine Beeinträchtigung von empfindlichen Oberflächen der zu handhabenden Werkstücke bei bestimmten Materialpaarungen zwischen dem Fördergurt und dem Werkstückträger oder durch verbleibende Materialreste auf dem Fördergurt und dem Werkstück gegeben sein. Eine solche nachteilige Materialpaarung ist beispielsweise Baustahl und Edelstahl, die zur Korrosion führen.

Aus der WO 97/09252 A1 geht des Weiteren ein Transportband hervor, bei welchem, die Oberseite des Transportbandes eine Auflage aufweist, die in regelmäßigen Abständen durch Vertiefungen unterbrochen ist, wobei diese Vertiefungen quer zur Längserstreckung des Bandes verlaufen. Dadurch ist wiederum eine einheitliche Oberfläche geschaffen, die sich über das gesamte Band erstreckt.

Aus der US 2010/0078296 A1 geht des Weiteren ein Transportband hervor, welches aus einem umlaufenden Gewebeband besteht, an welchem Stegmodule mit zur Laufseite weisenden Rippen vorgesehen sind, über welche eine Antriebsbewegung durch Antriebsrollen erfolgt. Zwischen den Stegmodulen ist ein nachgiebiges Füllmaterial vorgesehen, welches das Gewebe umgibt und zu den Stegmodulen eine gelenkartige Verbindung bildet und wobei eine durchgehende Gelenkkontaktfläche geschaffen ist.

Des Weiteren ist aus der DE 10 2004 041 705 A1 ein Fördergurt für eine maschinelle Fördereinrichtung aus einem Bandmaterial bekannt, welches eine Tragseite für das Fördergut beziehungsweise das oder die Werkstücke und eine Laufseite umfasst, welche entlang von zumindest einer Tragrolle geführt ist. Der Fördergurt weist eine vollflächige Auflage über die Breite der Tragseite auf und ist als Endlosband ausgebildet.

Auch diese vorgenannten maschinellen Förderbänder eignen sich nicht um ein Bearbeiten oder Abtransport von Materialien in einer Vorrichtung zur Aufnahme von Fördergütern zu verwenden, die mit einer Trenneinrichtung bearbeitet werden und sicherzustellen, so dass es zu keiner Verkratzung der Oberfläche des zu bearbeitenden Materials führt oder dass sich nachteilige Materialpaarungen beim Transport des Fördergutes ergeben, die zur Korrosion führen.

Der Erfindung liegt die Aufgabe zugrunde, eine Vorrichtung zur Aufnahme eines plattenförmigen Materials oder daraus hergestellten Werkstücken zu schaffen, welche eine Mehrmaterialbearbeitung mit einem Fördergurt sowie einen Transport von Werkstücken aus unterschiedlichen Materialien ohne Beeinträchtigung der Oberflächen dieser Werkstücke ermöglicht.

Der Erfindung liegt des Weiteren die Aufgabe zugrunde, ein Verfahren zum Transport von plattenförmigen Materialien oder daraus hergestellten Werkstücken in oder aus einer Bearbeitungsmaschine sowie ein Verfahren zum Bearbeiten von plattenförmigen Materialien oder Werkstücken in einer Bearbeitungsmaschine vorzuschlagen, welche eine Anpassung des Fördergurtes an das zu bearbeitende Material ermöglicht.

Die der Erfindung zugrunde liegende Aufgabe wird durch eine Vorrichtung zur Aufnahme von Fördergütern, insbesondere eines plattenförmigen Materials für zumindest einen Trennvorgang im plattenförmigen Material in einer Bearbeitungsmaschine gemäß Anspruch 1 gelöst. Diese Vorrichtung umfasst eine Trenneinrichtung, welche während des Trennvorgangs zumindest in einer Richtung bewegbar und wobei quer dazu eine Vorschubrichtung des Fördergutes vorgesehen ist. Desweiteren umfasst diese Vorrichtung einen ersten Auflagetisch mit einer ersten Auflagefläche und einen zweiten Auflagetisch mit einer zweiten Auflagefläche, wobei jeder Auflagetisch jeweils einen separat angetriebenen Fördergurt umfasst, der von mehreren Walzen geführt ist. Zwischen zumindest zwei in einer Ebene zueinander angeordneten Walzen ist eine Arbeitsfläche gebildet, wobei die erste und die zweite Arbeitsfläche durch einen Spalt voneinander beabstandet sind, der sich unter der Trenneinrichtung befindet. Der Fördergurt weist auf einer Tragseite des Bandmaterials eine erste Markierung und zumindest eine weitere Markierung für einen ersten und zumindest einen zweiten Flächenabschnitt auf, welche sich entlang der Kante und/oder jeweils teilweise oder über die gesamte Breite des Bandmaterials und sich zumindest teilweise in Längsrichtung des Bandmaterials erstrecken. Dadurch wird ermöglicht, dass das Förderband einerseits über die Markierungen erkannt und andererseits in unterschiedliche Flächenabschnitte unterteilbar ist oder unterteilt werden kann. Dabei kann beispielsweise ein Flächenabschnitt eine glatte Oberfläche und der weitere Flächenabschnitt eine aufgeraute Oberfläche aufweisen. Ebenso können eine gerillte oder gerändelte Oberflächenstruktur oder anderweitig profilierte Oberflächenstrukturen für die Flächenabschnitte ausgewählt werden. Eine Werkstückauflage zur Aufnahme eines plattenförmigen Materials zur Herstellung von Werkstücken ist durch den Einsatz der Fördergurte mit zumindest zwei voneinander abweichenden Flächenabschnitten zur Mehrmaterialbearbeitung geeignet. Prozessspezifisch und materialabhängig können die jeweiligen Flächenabschnitte zur Aufnahme des plattenförmigen Materials in der Auflagefläche positioniert werden, um das plattenförmige Material beziehungsweise die daraus herzustellenden Werkstücke aufzunehmen. Gleichzeitig kann eine Anpassung der Flächenabschnitte an die dabei auftretenden Temperaturen während des Trennvorganges vorgesehen sein, bei welchen die Flächenabschnitte einem Spalt unter der Trenneinrichtung zugeordnet sind.

Durch eine solche Vorrichtung wird ein Einsatz für eine Mehrmaterialbearbeitung ermöglicht, da mit einem einzigen Fördergurt mehrere unterschiedliche Materialien des Förderguts aufgenommen werden können. Dies ermöglicht, dass auch Fördergüter mit sehr empfindlichen Oberflächen ohne Beschädigungen transportiert werden können, da die die Oberfläche des Förderguts beeinträchtigenden Materialpaarungen, die insbesondere durch eine Materialverschleppung entstehen, verhindert werden können. Beispielsweise wird auf einem ersten Flächenabschnitt ausschließlich ein Fördergut aus Edelstahl und auf dem zweiten Flächenabschnitt nur ein Fördergut aus Baustahl transportiert, so dass selbst beim Verbleib von Abbrand, Materialresten oder dergleichen auf dem Förderabschnitt eine Beeinträchtigung der Oberfläche des Fördergutes oder des Fördergutes selbst nicht gegeben ist, da der Flächenabschnitt beziehungsweise das Bandsegment nur für eine Sorte oder Gruppe des Materials für den Transport bestimmt ist und verwendet wird.

Der Fördergurt der Vorrichtung kann Flächenabschnitte aufweisen, die optisch voneinander abweichen. Dadurch ist eine einfache Erkennung ermöglicht. Bevorzugt sind die Flächenabschnitte farblich voneinander abweichend ausgestaltet. Beispielsweise kann ein heller Flächenabschnitt für das Fördergut aus Edelstahl vorgesehen sein. Dadurch kann Schmutz, wie beispielsweise Abbrand, Materialreste oder dergleichen, auf Flächenabschnitten besser erkannt werden. Bei dem Fördergut aus Baustahl kann der Flächenabschnitt beispielsweise dunkel sein. Die optische Unterscheidung der einzelnen Flächenabschnitte kann auch durch ein Linien-, Streifen-, Karo- oder Rauten-Muster oder dergleichen gegeben sein, so dass unterschiedliche Flächenmuster den einzelnen Flächenabschnitten zugeordnet sind.

Des Weiteren können die Flächenabschnitte der Fördergurte voneinander abweichen, indem diese aus unterschiedlichen Materialien bestehen. Dabei kann sich das Bandmaterial selbst aus unterschiedlichen Materialien zusammensetzen. Dabei kann bspw. für jeden Flächenabschnitt eine bestimmte Dicke ausgewählt werden. Des Weiteren kann das Bandmaterial voneinander abweichend elektrische und/oder magnetische und/oder mechanische Eigenschaften aufweisen. Diese können sowohl an der Außenseite liegen als auch im Kern des Bandmaterials ausgebildet sein. Im letzteren Fall kann eine einheitliche Oberflächenbeschichtung gegeben sein, wobei dennoch zwar optisch nicht sichtbar jedoch durch Sensoren erkennbar diese elektrischen und/oder magnetischen und/oder mechanischen Eigenschaften abgefragt werden können. Des Weiteren kann berücksichtigt werden, dass in Abhängigkeit der Anforderungen an die wirkenden Temperaturen oder Empfindlichkeiten der zu transportierenden Oberflächen der Fördergüter die entsprechenden Materialien ausgewählt werden. Alternativ weist das Bandmaterial ein Trägermaterial auf, auf welchem verschiedene Materialien aufgebracht oder befestigt sind, wie beispielsweise durch Kleben oder dergleichen.

Die einzelnen Flächenabschnitte können des Weiteren durch in der Oberflächenstruktur voneinander abweichende Beschichtungen ausgebildet sein:

Der Fördergurt der Vorrichtung ist bevorzugt als endloses Förderband für die maschinelle Fördereinrichtung ausgebildet.

Der Fördergurt der Vorrichtung kann entlang eines endlosen Förderbandes ein oder mehrere Wiederholungen von den zumindest zwei voneinander abweichenden Flächenabschnitten aufweisen. Dies erfordert lediglich eine kurze Taktung beziehungsweise eine kurze Verfahrbewegung des Fördergurtes, um bei einem wechselnden Material des Förderguts einen zugehörigen Flächenabschnitt zur Aufnahme des Förderguts zu ermöglichen.

Der Fördergurt der Vorrichtung kann entlang eines endlosen Förderbandes mehrere voneinander abweichende Flächenabschnitte aufweisen, die insbesondere durch eine mäanderförmige Mehrfachumlenkung geführt sind. Danach ist ein Transport einer Vielzahl von verschiedenen Materialien mit einem Fördergurt möglich

Die der Erfindung zugrunde liegende Aufgabe wird des Weiteren gemäß Anspruch 6 durch ein Verfahren zum Transport von einem Fördergut in oder aus einer Bearbeitungsmaschine mit einer maschinellen Fördereinrichtung gelöst, bei der ein Fördergurt Markierungen für zumindest zwei voneinander abweichende Flächenabschnitte aufweist, welche Flächenabschnitte sich entlang der Kante und/oder jeweils zumindest teilweise oder über die gesamte Breite des Bandmaterials und in Längsrichtung des Bandmaterials zumindest teilweise erstrecken. Dabei ist vorgesehen, dass eine Steuerung, welche die Bearbeitung des plattenförmigen Materials in Werkstücken in der Bearbeitungsmaschine und die Überführung der Werkstücke beziehungsweise des Fördergutes auf die Fördereinrichtung ansteuert, einen Flächenabschnitt mittels der Markierung für das zu bearbeitende Material des Fördergutes auswählt und an einem Übergabepunkt von der Bearbeitungsmaschine zur Fördereinrichtung positioniert. Somit kann jeweils ein an das Material des zu transportierenden Fördergutes angepasster Flächenabschnitt zum Einsatz kommen.

Die der Erfindung zugrunde liegende Aufgabe wird des Weiteren gemäß Anspruch 7 durch ein Verfahren zum Bearbeiten eines plattenförmigen Materials in einer Bearbeitungsmaschine mit einer Trennvorrichtung gelöst, bei dem die Bearbeitungsmaschine einen ersten Auflagetisch mit einer ersten Auflagefläche und einen zweiten Auflagetisch mit einer zweiten Auflagefläche umfasst, wobei jeder der Auflagetische einen separat angetriebenen Fördergurt umfasst, bei welchem zumindest zwei voneinander abweichende Markierungen für Flächenabschnitte vorgesehen sind, welche sich entlang der Kante und/oder jeweils zumindest teilweise oder über die gesamte Breite des Bandmaterials und sich zumindest teilweise in Längsrichtung des Bandmaterials erstrecken, die voneinander abweichen. Der Fördergurt wird von mehreren Walzen geführt, und zwischen zumindest zwei zueinander beab-standeten und in einer Ebene liegenden Walzen wird die Auflage gebildet, wobei die erste und die zweite Auflagefläche durch einen Spalt voneinander beabstandet sind, der sich unter der Trenneinrichtung bildet. Dabei wird zur Aufnahme des Fördergutes, insbesondere des plattenförmigen Materials oder der zu bearbeitenden Werkstücke, ein Flächenabschnitt des Fördergutes ausgewählt, so dass der für das zu bearbeitende Material bestimmte Flächenabschnitt zur Aufnahme des Fördergutes in die Aufnahmeposition verfahren und aufgelegt wird. Somit kann auch in einer Werkstückauflage einer Bearbeitungsmaschine aufgrund der Markierungen immer der entsprechende Flächenabschnitt zur Aufnahme des zu bearbeitenden Fördergutes ausgewählt und für den nachfolgenden Bearbeitungsprozess oder den Ausschleusprozess bereitgestellt werden.

Die Erfindung sowie weitere vorteilhafte Ausführungsformen und Weiterbildungen derselben werden im Folgenden anhand der in den Zeichnungen dargestellten Beispiele näher beschrieben und erläutert.
- Figur 1: eine perspektivische Ansicht eines Fördergurtes,
- Figur 2: eine alternative Ausführungsform zu Figur 1,
- Figur 3: eine weitere alternative Ausführungsform zu Figur 1,
- Figur 4: eine perspektivische Ansicht einer Anordnung zum Abführen von Fördergut aus einer Bearbeitungsmaschine und
- Figur 5: eine schematische Schnittdarstellung einer Werkstückauflage der Bearbeitungsmaschine gemäß Figur4.

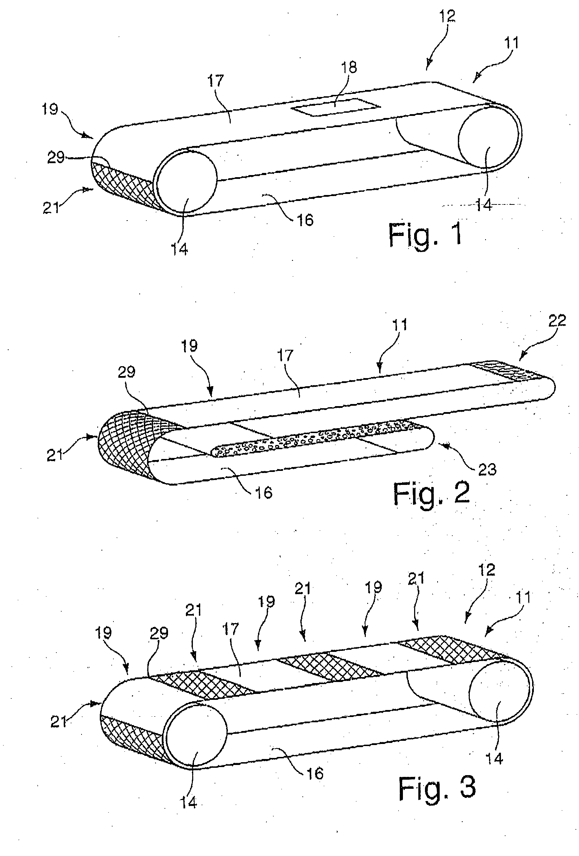

In Figur 1 ist perspektivisch ein Fördergurt 11 für eine schematisch teilweise dargestellte maschinelle Fördereinrichtung 12 dargestellt. Die Fördereinrichtung 12 umfasst zumindest zwei Umlenkrollen oder Umlenkwalzen 14, entlang denen der Fördergurt 11 geführt und umgelenkt wird. Der Fördergurt 11 ist in diesem Ausführungsbeispiel als ein endloses Förderband dargestellt. Alternativ kann dies auch ein Förderband sein, dessen beide Enden jeweils entsprechend auf- und abwickelbar sind.

Der Fördergurt 11 weist eine Laufseite 16 auf, welche an den Umlenkrollen 14 anliegt. Gegenüberliegend beziehungsweise auf der Außenseite ist eine Tragseite 17 vorgesehen, auf welcher ein beispielhaft dargestelltes Fördergut 18 aufliegt. Der Fördergurt 11 weist zwei Markierungen für einen ersten Flächenabschnitt 19 und einen zweiten Flächenabschnitt 21 auf der Tragseite 17 auf. Der erste und zweite Flächenabschnitt 19, 21 erstrecken sich bevorzugt über die gesamte Breite des Bandmaterials und zumindest teilweise in Längsrichtung des Bandmaterials des Fördergurtes 11.

Die Markierung des ersten Flächenabschnitts 19 weicht bevorzugt von dem des zweiten Flächenabschnitt 21 ab. Diese Flächenabschnitte 19, 21 grenzen in Übergangsstellen 29 aneinander an. Beispielsweise kann die Abweichung der zwei Markierungen voneinander optisch erfolgen. Der erste Flächenabschnitt 19 ist beispielsweise heller, und der zweite Flächenabschnitt 21 ist beispielsweise dunkler gestaltet. Ebenso können unterschiedliche Farben vorgesehen sein. Dadurch kann der erste Flächenabschnitt 19 einem Material oder einer Materialgruppe des Fördergutes 18 zugeordnet werden, die von dem Material oder einer Gruppe von Materialien eines weiteren Fördergutes 18 abweicht, für welche der zweite Flächenabschnitt 21 bestimmt ist.

Im Ausführungsbeispiel ist vorgesehen, dass das endlos ausgebildete Fördermittel auch zwei Förderabschnitte 19, 21 aufweist, die sich jeweils über die Hälfte der gesamten Länge des Endlosförderbandes erstrecken. Alternativ ist einer der beiden Flächenabschnitte 19, 21 größer als der andere Flächenabschnitt 21, 19.

Eine weitere alternative Ausführungsform kann vorsehen, dass die Markierung der beiden Flächenabschnitte 19, 21 nebeneinander angeordnet sind, so dass diese nicht jeweils vollständig über die Breite, sondern jeweils nur teilweise über die Breite angeordnet sind und sich zumindest teilweise in der Länge erstrecken. Dadurch kann beispielsweise bei einer linken Hälfte der erste Flächenabschnitt und bei einer rechten Hälfte der zweite Flächenabschnitt oder umgekehrt auf dem Fördergurt 11 ausgebildet sein. Bei dieser Anordnung können sich die Flächenabschnitte 19, 21 dann entlang einer vollständigen Umschlingung des endlosen Fördermittels erstrecken oder in Umfangsrichtung auch noch voneinander abweichende Flächenabschnitte aufweisen.

Die optische Unterscheidung des ersten und zweiten Flächenabschnittes 19, 21 kann des Weiteren auch durch das Aufbringen von unterschiedlichen Musterungen oder graphische Gestaltungen gegeben sein, welche ebenfalls Markierungen darstellen. Sofern die Markierungen durch die Oberfläche gebildet sind, die voneinander abweichen, kann sich die Markierung über den gesamten Flächenabschnitt erstrecken, sofern dieser beispielsweise auf der Tragseite ausgebildet ist. Die Markierung kann sich aber auch nur entlang einer Seitenkante des Bandmaterials erstrecken oder an der Seite und zumindest teilweise auf der Tragseite 17 und/oder Laufseite 16, wobei sich die Markierung bevorzugt über die gesamte Längserstreckung des jeweiligen Flächenabschnittes 19, 21 erstreckt. Alternativ kann auch immer nur der Startpunkt des nächsten Flächenabschnitts 19, 21 durch die Markierung, wie beispielsweise durch einen Balken, einen Streifen oder einer Randmarkierung dargestellt sein.

Eine weitere Alternative sieht vor, dass Markierungen der Flächenabschnitte 19, 21 eine unterschiedliche Oberflächenstruktur zur abweichenden Ausgestaltung der Flächenabschnitte 19, 21 ausgewählt wird. Dabei kann beispielsweise eine aufgeraute Oberfläche mit einer profilierten oder glatten Oberfläche oder dergleichen kombiniert werden. Darüber hinaus kann beispielsweise eine hitzebeständige Oberfläche bei einem Flächenabschnitt 19, 21 ausgebildet werden, um eine Dickblechbearbeitung zu ermöglichen. Des Weiteren kann ein Flächenabschnitt mit einer Oberfläche ausgebildet werden, die zur Schwingungsdämpfung geeignet ist. Solche Flächensegmente 19, 21 eignen sich für die Dünnblechbearbeitung.

Der Fördergurt 11 kann auch einen Aufbau mit einem durchgehenden Bandmaterial als Trägermaterial aufweisen, auf welchem für den jeweiligen Flächenabschnitt 19, 21 jeweils eine Beschichtung aufgebracht wird, die nahtlos ineinander übergehen, jedoch voneinander abweichen.

In Figur 2 ist eine alternative Ausführungsform des Fördergurtes 11 zu Figur 1 dargestellt. Bei dieser Ausführungsform sind anstelle von zwei voneinander abweichenden Markierungen der Flächenabschnitten 19, 21 beispielsweise mehrere voneinander abweichende Markierungen der Flächenabschnitte hintereinander gereiht vorgesehen. Im Ausführungsbeispiel sind vier voneinander abweichende Flächenabschnitte 19, 21, 22 und 23 dargestellt. Zur platzsparenden Anordnung eines solchen Fördergurtes 11 können eine Mehrfachumlenkung, insbesondere eine mäanderförmige als auch flaschenzugähnliche Mehrfachumlenkungen oder dergleichen vorgesehen sein.

Figur 3 zeigt eine weitere alternative Ausführungsform des Fördergurtes 11 zu Figur 1. Bei diesem Ausführungsbeispiel sind wiederum zwei voneinander abweichende Markierung für die Flächenabschnitte 19, 21 wie in Figur 1 vorgesehen, jedoch ist die Erstreckung eines jeden Flächenabschnittes 19, 21 in Transport-Richtung wesentlich kürzer, so dass ein oder mehrere Wiederholungen aus der Kombination des ersten Flächenabschnittes 19 und zweiten Flächenabschnittes 21 gegeben ist. Diese Ausführungsform ist besonders vorteilhaft, sofern geometrisch kleine Fördergüter 18 zu transportieren sind und/oder eine relativ hohe Wechselrate zwischen zwei unterschiedlichen Materialen der Fördergüter 18 gegeben ist. Die Flächenabschnitte 19, 21 weisen bevorzugt gleiche Flächenmaße und somit ein gleiches Rastermaß auf. Alternativ kann auch eines der beiden Flächenabschnitte 19, 21 länger als das andere ausgebildet sein.

Aus den Figuren 1 bis 3 wird offensichtlich, dass die Positionierung des jeweiligen Flächenabschnittes 19, 21, 22, 23 zur Aufnahme des entsprechenden Fördergutes 18 dadurch erzielt werden kann, indem der Fördergurt 11 solange in die eine oder in die andere Richtung verfahren wird, bis der entsprechende Flächenabschnitt 19, 21, 22, 23 an einem Übergabepunkt oder einer Aufnahmeposition vorgesehen ist. Bei der Ausführungsform gemäß Figur 3 sind relativ kurze Verfahrstrecken aufgrund der schnellen Wiederholung der Flächenabschnitte 19, 21 ermöglicht.

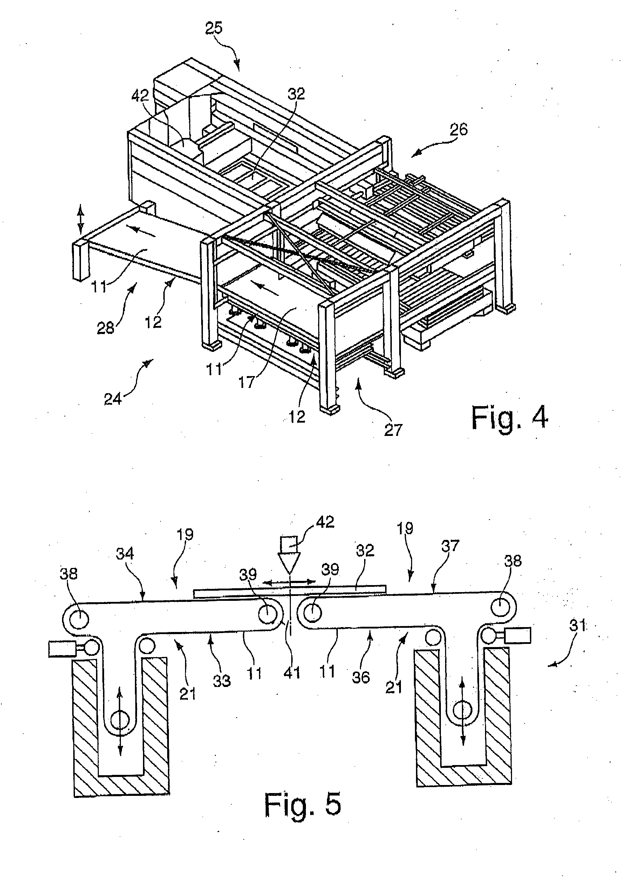

In Figur 4 ist eine Anordnung 24 zum Abführen von Fördergütern 18, insbesondere Werkstücken, aus einer Bearbeitungsmaschine 25 mit einer Umschlageinrichtung 26 in eine Transfereinrichtung 27 dargestellt, welche die Fördergüter 18 auf einen Entladeplatz 28 überführen. Diese Anordnung ist aus der DE 10 2010 038 885 B3 bekannt.

Die Transfereinrichtung 27 umfasst die maschinelle Fördereinrichtung 12 mit einem Fördergurt 11, die als endloses Förderband ausgebildet ist. Nachdem durch die Umschlageinrichtung 26 die aus der Bearbeitungsmaschine 25 herausgeführten Fördergüter 18, insbesondere Werkstücke, ergriffen und auf dem Fördergurt 11 der Fördereinrichtung 12 positioniert sind, wird der Fördergurt 11 entsprechend dem Pfeil in Längsrichtung angetrieben, so dass die Fördergüter 18 auf den Entladeplatz 28 übergeführt werden. Auch der Entladeplatz 28 kann einen Fördergurt 11 gemäß einem der vorbeschriebenen Ausführungsbeispiele aufweisen. In einer solchen Bearbeitungsmaschine 25 werden in einem ersten Bearbeitungsprozess beispielsweise aus einem aus Baustahl bestehenden plattenförmigen Material Werkstücke durch einen Schneidprozess hergestellt, welche anschließend in die Umschlageinrichtung 26 übergeführt werden. Zur Aufnahme der hergestellten Werkstücke beziehungsweise der Fördergüter 18 aus Baustahl wird beispielsweise der erste Flächenabschnitt 19 mit seiner Tragseite in einer Ausgangsposition oder Übergangsposition positioniert, so dass die Umschlageinrichtung 26 die Werkstücke beziehungsweise Fördergüter 18 auf dem ersten Flächenabschnitt 19 ablegen kann. Anschließend wird der Fördergurt 11 in Tränsportrichtung gemäß Pfeil angetrieben sowie die Fördergüter 18 aus der Transfereinrichtung 27 abtransportiert und auf den Entladeplatz 28 übergeben. Sofern der Entladeplatz 28 ebenfalls einen Fördergurt 11 umfasst, wird wiederum der erste Flächenabschnitt 19 des Fördergurtes 11 nach oben weisend und zum Übergabepunkt positioniert, so dass die übergeführten Werkstücke wiederum auf dem ersten Flächenabschnitt 19 des Fördergurtes 11 des Entladeplatzes 28 zur Auflage kommen.

Über einen Sensor kann beispielsweise eine Abfrage bezüglich der Markierung, beispielsweise der Oberfläche, des Fördergurtes 11 erfolgen, um den ersten und den zumindest einen weiteren Flächenabschnitt 19, 21 zu erkennen, damit der jeweilige Flächenabschnitt dem Übergabepunkt zugeordnet wird. Alternativ können die Übergangsstellen 29 vom ersten zum zweiten Flächenabschnitt 19, 21 oder vom zweiten zum ersten Flächenabschnitt 21, 19 oder zwischen mehreren Flächenabschnitten 19, 21, 22, 23 in einer Steuerung der Bearbeitungsmaschine 25 hinterlegt werden, so dass über die Wegerfassung des Verfahrweges des Fördergurtes 11 während des Antriebes der Umlenkrollen 14 die exakte Position des jeweiligen Flächenabschnittes 19, 21, 22, 23 bekannt ist und eine Ansteuerung des gewünschten Flächenabschnittes 19, 21, 22, 23 zur jeweiligen Übergabeposition ermöglicht wird. Dabei kann gleichzeitig auch ermittelt werden, ob eine Verfahrbewegung in oder entgegen der Transportrichtung zu einer verkürzten Verfahrstrecke des Flächenabschnittes 19, 21 zur Übergabeposition erfolgt, so dass eine entsprechende Ansteuerung zur Taktzeitreduzierung ausgeführt wird.

Sofern eine Serie von Fördergütern 18 aus gleichem Material oder einer Materialgruppe von dem ersten Flächenabschnitt 19 aufgenommen werden soll, wird dieser Flächenabschnitt 19 derart positioniert, dass das erste Fördergut 18 an der in Transportrichtung weisenden Übergangsstelle 29 zwischen dem ersten und zweiten Flächenabschnitt 19, 21 angeordnet wird, so dass im Nachfolgenden ein möglichst langer Bereich des ersten Flächenabschnittes 19 zum Auflegen der Fördergüter 18 ermöglicht wird.

Sofern nun in einem nachfolgenden Bearbeitungsprozess das Material für das Fördergut 18 aus Edelstahl besteht, wird der zweite Flächenabschnitt 21 in die Übergabeposition oder Aufnahmeposition übergeführt. Somit wird vermieden, dass gegebenenfalls auf dem ersten Flächenabschnitt 19 verbleibende Partikel aus Baustahl mit dem Fördergut 18 aus Edelstahl in Verbindung kommen, so dass eine Oberflächenkorrosion an dem Fördergut 18 vermieden wird.

In Figur 5 ist eine schematische Schnittdarstellung einer Vorrichtung 31 zur Aufnahme von einem plattenförmigen Material 32 als Fördergut 18 dargestellt, welche beispielsweise in der Bearbeitungsmaschine 25 gemäß Figur 4 vorgesehen sein kann. Eine solche Vorrichtung 31 ist aus der EP 1 901 893 B1 bekannt. Diese Vorrichtung 31 ist als Werkstückauflage ausgebildet und umfasst einen ersten Auflagetisch 33 mit einer ersten Auflagefläche 34, sowie einen zweiten Auflagetisch 36 mit einer zweiten Auflagefläche 37, die jeweils einen getrennt angetriebenen Fördergurt 11 umfassen. Der Fördergurt 11 ist durch mehrere Walzen 38, 39 geführt, wobei zwischen zwei in einer Ebene liegenden Walzen 38, 39 die erste und zweite Auflagefläche 34, 37 liegt. Zwischen den Auflageflächen 34 und 37 ist ein Spalt 41 gebildet, der sich unter einer Trenneinrichtung 42 befindet.

Die Zuordnung eines Flächenabschnittes 19, 21 zum jeweiligen Material des Fördergutes 18 wird nachfolgend beispielhaft anhand von Figur 5 beschrieben.

Die Fördergurte 11 für den ersten und zweiten Auflagetisch 33, 36 sind gemäß dem Ausführungsbeispiel in Figur 1 ausgebildet. Bevor das plattenförmige Material 32 über eine nicht näher dargestellte Zuführeinrichtung dem ersten Auflagetisch 33 zugeführt wird, erfolgt die Zuordnung von beispielsweise dem ersten Flächenabschnitt 19 zum plattenförmigen Material. Damit der erste Flächenabschnitt 19 das plattenförmige Material 32 auch aufnimmt, ist erforderlich, dass eine Übergangsstelle 29 oder eine dort angebrachte Markierung, insbesondere eine Passermarke zwischen dem ersten Flächenabschnitt 19 und dem zweiten Flächenabschnitt 21 nahe der linken Umlenkrolle 38 liegt, wobei der zweite Flächenabschnitt 21 die Auflagefläche 34 bildet und der erste Flächenabschnitt 19 sich von der Walze 38 nach links entlang der Umschlingung nach unten erstreckt. Auf diese Position wird beispielsweise der Fördergurt 11 verfahren. Anschließend erfolgt die Zuführung des plattenförmigen Materials 32, wobei der Fördergurt 11 in Richtung auf die zweite Walze 39 zu bewegt wird und das plattenförmige Material auf den ersten Flächenabschnitt 19 aufnimmt. Die vorbeschriebene Einstellung des ersten Flächenabschnittes 19 wird an dem zweiten Auflagetisch 36 in Analogie durchgeführt, so dass das plattenförmige Material nach dem Überfahren des Spaltes 41 wiederum auf dem ersten Flächenabschnitt 19 des Fördergurtes 11 des zweiten Auflagetisches 36 aufliegt. Dadurch ist gewährleistet, dass das plattenförmige Material 32 nur von dem ersten Flächenabschnitt 19 sowohl des ersten als auch zweiten Fördergurtes 11 getragen wird. Nach dem Herstellen der Werkstücke durch einen Trennvorgang mit der Trennvorrichtung 42, insbesondere einer Schneidbearbeitung mittels eines Lasers, wird das plattenförmige Material 32 weiter nach rechts verfahren und aus der Bearbeitungsmaschine 25 herausgeführt. Im Anschluss daran greift die Umschlageinrichtung 26 (Figur 4) an den Werkstücken beziehungsweise den Fördergütern 18 an und setzt diese auf die Transfereinrichtung 27 um.

## Patentansprüche

1. Vorrichtung zur Aufnahme von Fördergütern (18), insbesondere eines plattenförmigen Materials (32), für zumindest einen Trennvorgang im Fördergut (18), insbesondere plattenförmigen Material (32), mit einer Trenneinrichtung (42), welche während des Trennvorganges zumindest in einer Richtung bewegbar und wobei quer dazu eine Vorschubrichtung des Fördergutes (18) vorgesehen ist, und mit einem ersten Auflagetisch (33), der eine erste Auflagefläche (34) aufweist und mit einem zweiten Auflagetisch (36), der eine zweite Auflagefläche (37) aufweist, wobei jeder der Auflagetische (33, 36) einen separat angetriebenen Fördergurt (11) aus einem Bandmaterial mit einer Tragseite (17) für das Fördergut (18) und mit einer Laufseite (16), welche entlang von zumindest einer Tragrolleoder Umlenkrolle (14) einer Fördereinrichtung (12) bewegbar ist, umfasst, der von mehreren Walzen (38, 39) geführt und zwischen zumindest zwei zueinander beabstandeten und in einer Ebene liegenden Walzen (38, 39) die Auflagefläche (34, 37) gebildet ist, wobei die erste und die zweite Auflagefläche (34, 37) durch einen Spalt (41) voneinander beabstandet sind, der sich unter der Trenneinrichtung (42) befindet, **dadurch gekennzeichnet, dass** auf der Tragseite (17) und/oder auf der Laufseite (16) und/oder an einer Kante des Bandmaterials eine erste Markierung und zumindest eine weitere Markierung für einen ersten und zumindest einen zweiten Flächenabschnitt (19, 21) vorgesehen sind, welche sich entlang der Kante und/oder teilweise oder über die gesamte Breite des Bandmaterials und sich zumindest teilweise in Längsrichtung des Bandmaterials erstrecken.

2. Vorrichtung nach Anspruch 1, **dadurch gekennzeichnet, dass** die Flächenabschnitte (19, 21) optisch, insbesondere in der Farbe, voneinander abweichen und/oder dass die Flächenabschnitte (19, 21) aus voneinander abweichenden Materialien ausgebildet sind.

3. Vorrichtung nach Anspruch 1, **dadurch gekennzeichnet, dass** die Flächenabschnitte (19, 21) durch in der Oberflächenstruktur voneinander abweichenden Beschichtungen ausgebildet sind.

4. Vorrichtung nach Anspruch 1, **dadurch gekennzeichnet, dass** entlang eines endlosen Förderbandes die zumindest zwei voneinander abweichenden Flächenabschnitte (19, 21) zumindest ein weiteres Mal auf dem Bandmaterial vorgesehen sind.

5. Vorrichtung nach Anspruch 4, **dadurch gekennzeichnet, dass** entlang des endlosen Förderbandes mehrere voneinander abweichende Flächenabschnitte (19, 21, 22, 23) vorgesehen sind, die vorzugsweise durch eine Mehrfachumlenkung geführt sind.

6. Verfahren zum Transport von Fördergütern (18) in oder aus einer Bearbeitungsmaschine (25) mit einer Transfereinrichtung (27), die eine maschinelle Fördereinrichtung (12) mit einem Fördergurt (11) aus einem Bandmaterial mit einer Tragseite (17) für das Fördergut (18) und mit einer Laufseite (16), welche entlang von zumindest einer Tragrolle oder Umlenkrolle (14) einer Fördereinrichtung (12) bewegbar ist, umfasst, wobei die Bearbeitgungsmaschine (25) eine Steuerung aufweist, welche die Bearbeitung der Fördergüter (18) in der Bearbeitungsmaschine (25) ansteuert und die Überführung der Fördergüter (18) auf den Fördergurt (11) der Fördereinrichtung (12) ansteuert, **dadurch gekennzeichnet, dass** auf der Tragseite (17) und/oder auf der Laufseite (16) und/oder an einer Kante des Bandmaterials eine erste Markierung und zumindest eine weitere Markierung für einen ersten und zumindest einen zweiten Flächenabschnitt (19, 21) vorgesehen sind, welche sich entlang der Kante und/oder teilweise oder über die gesamte Breite des Bandmaterials und sich zumindest teilweise in Längsrichtung des Bandmaterials erstrecken, und dass zum Abführen der bearbeiteten Fördergüter (18) ein Flächenabschnitt (19, 21) mittels einer dazugehörigen Markierung ausgewählt und an eine Aufnahmeposition von der Bearbeitungsmaschine (25) zur Transfereinrichtung (27) positioniert wird, welche eine auf das Material des zu bearbeitenden Fördergutes (18) angepasste Oberfläche aufweist.

7. Verfahren zum Bearbeiten von einem Fördergut (18), insbesondere eines plattenförmigen Materials (32), in einer Bearbeitungsmaschine (25) mit einer Trenneinrichtung (42), welche während des Trennvorganges zumindest in einer Richtung bewegbar und wobei quer dazu eine Vorschubrichtung des Fördergutes (18) vorgesehen ist, sowie mit einem ersten Auflagetisch (33), der eine erste Auflagefläche (34) aufweist und mit einem zweiten Auflagetisch (36), der eine zweite Auflagefläche (37) aufweist, wobei jeder der Auflagetische (33, 36) einen separat angetriebenen Fördergurt (11) aus einem Bandmaterial mit einer Tragseite (17) für das Fördergut (18) und mit einer Laufseite (16), welche entlang von zumindest einer Tragrolle oder Umlenkrolle (14) einer Fördereinrichtung (12) bewegbar ist, umfasst, der von mehreren Walzen (38, 39) geführt und zwischen zumindest zwei zueinander beabstandeten und in einer Ebene liegenden Walzen (38, 39) die Auflagefläche (34, 37) gebildet ist, wobei die erste und die zweite Auflagefläche (34, 37) durch einen Spalt (41) voneinander beabstandet sind, der sich unter der Trenneinrichtung (42) befindet, **dadurch gekennzeichnet, dass** auf der Tragseite (17) und/oder auf der Laufseite (16) und/oder an einer Kante des Bandmaterials eine erste Markierung und zumindest eine weitere Markierung für einen ersten und zumindest einen zweiten Flächenabschnitt (19, 21) vorgesehen sind, welche sich entlang der Kante und/oder teilweise oder über die gesamte Breite des Bandmaterials und sich zumindest teilweise in Längsrichtung des Bandmaterials erstrecken, und dass zur Aufnahme des Fördergutes (18) ein Flächenabschnitt (19, 21) der Fördergurte (11) mittels einer dazugehörigen Markierung ausgewählt wird, so dass der für das zu bearbeitende Material bestimmte Flächenabschnitt (19, 21) zur Aufnahme des Fördergutes (18) in eine Aufnahmeposition verfahren und anschließend aufgelegt wird.

## Claims

1. An apparatus for holding conveyable articles (18), in particular a plate-like material (32), for at least one separation process to be operated in said conveyable article (18), in particular in the plate-like material (32), said apparatus having a separating device (42) which is movable during the separation process in at least one direction while in a transverse direction thereto a feed direction of the conveyable article (18) is provided, said apparatus further having a first support table (33) which has a first support surface (34), and a second support table (36) which has a second support surface (37), each of the support tables (33, 36) including a separately driven conveyor belt (11) made of a belt material having a carrying side (17) for the conveyable article (18) and a running side (16) which is movable along at least one carrying roller or deflection roller (14) of a conveyor device (12), said conveyor belt being guided by a plurality of cylinders (38, 39), with at least two of the cylinders (38, 39) spaced apart with respect to each other and disposed in a common plane forming the support surface (34, 37), the first and second support surfaces (34, 37) being spaced apart from each other by a gap (41) which is located beneath the separating device (42), **characterised in that** on the carrying side (17) and/or on the running side (16) and/or on an edge of the belt material, a first guiding mark and at least one further guiding mark for a first and at least one further surface portion (19, 21) are provided which extend along the edge and/or across part of, or the whole of, the width of the tape material and which extend at least partially in the longitudinal direction of the tape material.

2. The apparatus as claimed in claim 1, **characterised in that** the surface portions (19, 21) differ optically from each other, in particular in their colour, and/or **in that** the surface portions (19, 21) are formed from dissimilar materials.

3. The apparatus as claimed in claim 1, **characterised in that** the surface portions (19, 21) are formed by coatings dissimilar from each other in their surface structure.

4. The apparatus as claimed in claim 1, **characterised in that** along an endless conveyor belt the at least two dissimilar surface portions (19, 21) are provided at least one further time on the belt material.

5. The apparatus as claimed in claim 4, **characterised in that** along the endless conveyor belt a plurality of dissimilar surface portions (19, 21, 22, 23) are provided which are preferably guided through a multiple deflection arrangement.

6. A method for transporting conveyable articles (18) into, or out of, a processing machine (25) using a transfer device (27) that comprises a mechanical conveyor device (12) having a conveyor belt (11) made of a belt material having a carrying side (17) for the conveyable article (18) and a running side (16) which is movable along at least one carrying roller or deflection roller (14) of a conveyor device (12), the processing machine (25) comprising a control unit which activates the processing of the conveyable articles (18) in the processing machine (25) and activates the transferring of the conveyable articles (18) onto the conveyor belt (11) of the conveyor device (12), **characterised in that** on the carrying side (17) and/or on the running side (16) and/or on an edge of the tape material, a first guiding mark and at least one further guiding mark for a first and at least one further surface portion (19, 21) are provided which extend along the edge and/or across part of, or the whole of, the width of the belt material and which extend at least partially in the longitudinal direction of the tape material, and **in that** for removing the processed conveyable articles (18) a surface portion (19, 21) is selected using a corresponding guiding mark and is positioned in a holding position during the passage from the processing machine (25) to the transfer device (27) which has a surface adapted to the material of the conveyable article (18) that is being processed.

7. A method for processing a conveyable article (18), in particular a plate-like material (32) in a processing machine (25) using a separating device (42) which is movable, during the separation process, in at least one direction while in a transverse direction thereto a feed direction of the conveyable article (18) is provided, said apparatus further having a first support table (33) which has a first support surface (34), and a second support table (36) which has a second support surface (37), each of the support tables (33, 36) including a separately driven conveyor belt (11) made of a belt material having a carrying side (17) for the conveyable article (18) and a running side (16) which is movable along at least one carrying roller or deflection roller (14) of a conveyor device (12), said conveyor belt being guided by a plurality of cylinders (38, 39), with at least two of the cylinders (38, 39) spaced apart with respect to each other and disposed in a common plane forming the support surface (34, 37), the first and second support surfaces (34, 37) being spaced apart from each other by a gap (41) which is located beneath the separating device (42), **characterised in that** on the carrying side (17) and/or on the running side (16) and/or on an edge of the belt material, a first guiding mark and at least one further guiding mark for a first and at least one further surface portion (19, 21) are provided which extend along the edge and/or across part of, or the whole of, the width of the tape material and which extend at least partially in the longitudinal direction of the belt material, and **in that** for holding the conveyable article (18) a surface portion (19, 21) of the conveyor belts (11) is selected using a corresponding guiding mark, such that the surface portion (19, 21) designed for holding the material to be processed is moved into a holding position for holding the conveyable article (18) which is subsequently placed thereon.

## Revendications

1. Dispositif destiné à recevoir des produits à transporter (18), en particulier un matériau (32) en forme de plaque, pour réaliser au moins une opération de séparation dans le produit à transporter (18), en particulier un matériau (32) en forme de plaque, avec un système de séparation (42) qui peut être déplacé pendant l'opération de séparation au moins dans une direction, une direction de l'avance du produit à transporter (18) étant prévue transversalement à celle-ci, avec une première table porte-pièce (33) qui présente une première surface d'appui (34) et avec une deuxième table porte-pièce (36) qui présente une deuxième surface d'appui (37), chacune des tables porte-pièce (33, 36) comprenant une bande transporteuse (11) entraînée séparément et réalisée en un matériau en bande avec une face porteuse (17) pour le produit à transporter (18) et avec une face non-porteuse (16) pouvant se déplacer le long d'au moins un rouleau d'appui ou rouleau de renvoi (14) d'un dispositif de transport (12) et laquelle est guidée par plusieurs rouleaux (38, 39), la surface d'appui (34, 37) étant formée entre au moins deux rouleaux (38, 39) disposés à une distance donnée l'un de l'autre et s'inscrivant dans un même plan, la première et la deuxième surface d'appui (34, 37) étant séparées l'une de l'autre par une fente (41) qui se situe sous le système de séparation (42), **caractérisé en ce que** sur la face porteuse (17) et/ou sur la face non-porteuse (16) et/ou à un bord du matériau en bande sont prévus un premier marquage et au moins un autre marquage pour une première et au moins une deuxième partie de surface (19, 21) lesquels s'étendent le long du bord et/ou partiellement sur la largeur du matériau en bande ou sur la totalité de celle-ci et s'étendent au moins partiellement dans le sens longitudinal du matériau en bande.

2. Dispositif selon la revendication 1, **caractérisé en ce que** les parties de surface (19, 21) diffèrent optiquement l'une de l'autre, en particulier par la couleur, et/ou **en ce que** les parties de surface (19, 21) sont réalisées dans des matériaux différents entre eux.

3. Dispositif selon la revendication 1, **caractérisé en ce que** les parties de surface (19, 21) sont réalisées, quant à leur structure de surface, avec des revêtements différents entre eux.

4. Dispositif selon la revendication 1, **caractérisé en ce que** le long d'une bande transporteuse sans fin, lesdites au moins deux parties de surface (19, 21) différentes entre elles sont prévues au moins une autre fois sur le matériau en bande.

5. Dispositif selon la revendication 4, **caractérisé en ce que** le long de la bande transporteuse sans fin sont prévues plusieurs parties de surface (19, 21, 22, 23) différentes entre elles qui sont guidées de préférence par un renvoi multiple.

6. Procédé destiné à transporter des produits à transporter (18) dans une machine d'usinage (25) ou hors de celle-ci, avec un dispositif de transfert (27) qui comprend un dispositif de transport (12) mécanique avec une bande transporteuse (11) réalisée en un matériau en bande avec une face porteuse (17) pour le produit à transporter (18) et une face non-porteuse (16) qui peut être déplacée le long d'au moins un rouleau d'appui ou rouleau de renvoi (14) d'un dispositif de transport (12), la machine d'usinage (25) présentant une commande qui commande l'usinage des produits à transporter (18) dans la machine d'usinage (25) et commande le transfert des produits à transporter (18) sur la bande transporteuse (11) du dispositif de transport (12), **caractérisé en ce que** sur la face porteuse (17) et/ou sur la face non-porteuse (16) et/ou à un bord du matériau en bande sont prévus un premier marquage et au moins un autre marquage pour une première et au moins une deuxième partie de surface (19, 21) lesquels s'étendent le long du bord et/ou partiellement sur la largeur du matériau en bande ou sur la totalité de celle-ci et s'étendent au moins partiellement dans le sens longitudinal du matériau en bande, et **en ce que** pour faire sortir les produits à transporter (18) usinés, une partie de surface (19, 21) est sélectionnée au moyen d'un marquage correspondant et est positionnée au niveau d'une position de réception lors du passage de la machine d'usinage (25) au dispositif de transfert (27) qui présente une surface adaptée au matériau du produit à transporter (18) devant être usiné.

7. Procédé destiné à usiner un produit à transporter (18), en particulier un matériau (32) en forme de plaque, dans une machine d'usinage (25) à l'aide d'un système de séparation (42) qui peut être déplacé pendant l'opération de séparation au moins dans une direction, une direction de l'avance du produit à transporter (18) étant prévue transversalement à celle-ci, avec une première table porte-pièce (33) qui présente une première surface d'appui (34) et avec une deuxième table porte-pièce (36) qui présente une deuxième surface d'appui (37), chacune des tables porte-pièce (33, 36) comprenant une bande transporteuse (11) entraînée séparément et réalisée en un matériau en bande avec une face porteuse (17) pour le produit à transporter (18) et avec une face non-porteuse (16) pouvant se déplacer le long d'au moins un rouleau d'appui ou rouleau de renvoi (14) d'un dispositif de transport (12) et laquelle est guidée par plusieurs rouleaux (38, 39), la surface d'appui (34) étant formée entre au moins deux rouleaux (38, 39) disposés à une distance donnée l'un de l'autre et s'inscrivant dans un même plan, la première et la deuxième surface d'appui (34, 37) étant séparées l'une de l'autre par une fente (41) qui se situe sous le système de séparation (42), **caractérisé en ce que** sur la face porteuse (17) et/ou sur la face non-porteuse (16) et/ou à un bord du matériau en bande sont prévus un premier marquage et au moins un autre marquage pour une première et au moins une deuxième partie de surface (19, 21) lesquels s'étendent le long du bord et/ou partiellement sur la largeur du matériau en bande ou sur la totalité de celle-ci et s'étendent au moins partiellement dans le sens longitudinal du matériau en bande, et **en ce que** pour recevoir le produit à transporter (18), une partie de surface (19, 21) de la bande transporteuse (11) est sélectionnée au moyen d'un marquage correspondant de sorte que la partie de surface (19, 21) prévue pour le matériau à usiner est déplacée dans une position de réception en vue de la réception du matériau à transporter (18) et est ensuite chargée dudit matériau.
